# FASCICULE DE BREVET EUROPEEN

(11) **EP 4 416 777 B1**
(45) Date de publication et mention de la délivrance du brevet: **30.07.2025**
(21) Numéro de dépôt: 22800166.5
(22) Date de dépôt: 03.10.2022
(51) Int. Cl.: H01M 8/0276, H01M 8/0286, H01M 8/2483

(54) **DISPOSITIF D'OBTURATION CONFIGURÉ POUR ÊTRE MONTÉ DANS UNE CHEMINÉE DE CIRCULATION DE FLUIDE D'UN EMPILEMENT DE PILES À COMBUSTIBLE ET PROCEDÉ D'OBTURATION**
VERSCHLUSSVORRICHTUNG AUSGELEGT ZUR MONTAGE IN EINEN FLUIDZIRKULATIONSKANAL EINES BRENNSTOFFZELLENSTAPELS, SOWIE VERFAHREN ZUM VERSCHLIESSEN
BLINDING DEVICE CONFIGURED FOR BEING MOUNTED INTO FLUID CIRCULATION CHANNEL OF A FUEL CELL STACK, AND BLINDING METHOD

(30) Priorité: 11.10.2021 FR 2110718
(43) Date de publication de la demande: 21.08.2024
(73) Titulaire: Safran Power Units, 31000 Toulouse (FR)
(72) Inventeur: QUINTON, Romain, 77550 MOISSY-CRAMAYEL (FR); ABBOU, Sofyane, 77550 MOISSY-CRAMAYEL (FR); BUSO, Patrice, Daniel, Claude, 77550 MOISSY-CRAMAYEL (FR)
(74) Mandataire: Argyma
(86) Numéro de dépôt international: PCT/EP2022/077486
(87) Numéro de publication internationale: WO 2023/061793

(56) Documents cités:
- DE-A1- 10 351 921
- FR-A1- 2 975 228
- US-A- 4 761 350

## Description

### Domaine technique

La présente invention concerne le domaine de la réparation des piles à combustible, en particulier, embarquées dans un aéronef afin de fournir de l'énergie propulsive et non propulsive.

Une pile à combustible permet de produire de l'énergie électrique à partir d'une réaction électrochimique entre différents fluides. De manière classique, une pile à combustible est alimentée en hydrogène et en oxygène qui réagissent dans la pile à combustible afin de générer de l'énergie électrique. Une pile à combustible comprend un empilement comprenant une pluralité de cellules alignées selon un axe d'empilement. L'empilement des cellules, désigné « Stack » en langue anglaise, permet la réaction électrochimique à partir des fluides.

Chaque cellule comprend un électrolyte conducteur d'ions entouré de deux électrodes qui sont elles-mêmes entourées de plaques d'interconnexion. A titre d'exemple, dans le cas d'une pile à combustible du type à membrane d'échange de protons connu sous son abréviation anglaise PEMFC pour « Proton Exchange Membrane Fuel Cell », l'électrolyte se présente sous la forme d'une membrane polymère conductrice de protons et les électrodes se présentent sous la forme d'un milieu poreux porteur d'un catalyseur tel que du platine. L'ensemble électrolyte et électrodes est appelé Assemblage Membrane Electrode, connu sous son abréviation AME. Chaque AME est mis au contact de gaz réactifs sur ses deux faces opposées (par exemple de l'hydrogène et de l'oxygène éventuellement contenus dans l'air) grâce aux plaques d'interconnexion pour former une cellule.

De manière connue, l'assemblage de deux plaques d'interconnexion, appartenant à deux cellules adjacentes, est appelé plaque bipolaire. Ainsi, une plaque bipolaire se retrouve intercalée entre la cathode d'un AME et l'anode de l'AME adjacent. Une plaque bipolaire alimente, d'une part un premier AME du côté anodique en combustible (hydrogène) et, d'autre part, un deuxième AME du côté cathodique en comburant (oxygène). De manière générale, chaque plaque bipolaire comporte un circuit interne de refroidissement dans lequel circule un fluide caloporteur servant à apporter de la chaleur ou extraire la chaleur produite par la réaction exothermique.

Le courant généré par les cellules est récupéré aux deux extrémités de l'empilement par des plaques conductrices dites collecteurs. La puissance électrique délivrée par la pile à combustible est fonction du nombre de cellules (capacité de tension délivrée), de la surface active des cellules (capacité d'intensité délivrée) et des débits des fluides réactifs (importance de la réaction électrochimique qui produit le courant).

L'ensemble de l'empilement de cellules est maintenu comprimé entre deux plaques dites terminales reliées par des tirants qui maintiennent l'ensemble et garantissent l'étanchéité de l'empilement. Cette étanchéité est assurée grâce à des joints intercalés entre les plaques bipolaires et les AME des cellules. Les plaques terminales sont classiquement massives car elles doivent appliquer une pression uniforme sur la surface des cellules et être stables dimensionnellement sous l'effet de la pression interne de la pile et des variations de température.

Les fluides réactifs et caloporteur sont introduits et évacués au niveau des plaques terminales qui les distribuent dans des cheminées de circulation traversant l'empilement. Ces cheminées de circulation résultent de l'empilement d'ouvertures formées dans les cellules. A titre d'exemple, trois cheminées introduisent les fluides d'un côté de l'empilement (deux fluides réactif et un fluide caloporteur si nécessaire) pour transiter dans les cellules tandis que trois autres cheminées évacuent les fluides d'un autre côté de l'empilement.

De manière connue, une pile à combustible comprend un empilement comprenant une pluralité de cellules alignées selon un axe d'empilement. Des tirants relient une portion extérieure des plaques terminales de manière périphérique afin d'appliquer un effort de compression constant sur l'empilement. Les plaques terminales comportent des conduites de circulation qui débouchent dans les cheminées de circulation de l'empilement.

Lors de la réaction électrochimique dans la pile à combustible, les fluides réactifs se chargent avec des traces d'acide rentrant dans la composition des AME. Ces traces d'acide phosphorique sont présentes dans les cheminées de circulation correspondant aux sorties des deux circuits de fluides combustibles, en particulier, sous forme de vapeur d'eau dans le cas d'une pile à combustible haute température. Cet acide peut cristalliser, en particulier lors d'une étape de démarrage/arrêt de la pile à combustible pendant laquelle la température est inférieure à la température normale de fonctionnement, ce qui peut obturer les cheminées de circulation. Une telle obturation est susceptible d'entraîner des endommagements pouvant conduire à la création de points chauds avec un risque de perforation de l'AME. Outre une perte de rendement de la pile à combustible, la probabilité de risques de feu et de fuite est augmentée.

En cas d'endommagement d'une ou plusieurs cellules, il est nécessaire d'isoler ces cellules de la circulation des fluides réactifs pour qu'elles ne soient plus productrices d'électricité ou n'autorisent plus de communications de fluides entre les réactifs. D'un point de vue électrique, ces cellules doivent être shuntées pour ne pas interrompre la génération électrique dans le Stack.

Pour atteindre une cellule défectueuse, il faut descendre le long de chacune des cheminées pour intervenir individuellement sur chacune des ouvertures de circulation de la cellule défectueuse. Cette intervention est complexe compte tenu de la hauteur des cheminées (jusqu'à 300 mm) et de leur section (de 300 à 1000 mm²).

On connait dans l'art antérieur une méthode pour réparer une cellule défectueuse au cours de laquelle un choc électrique est appliqué sur la cellule défectueuse de manière à percer la membrane. Les ouvertures de circulation sont obturées individuellement par une dépose de résine. US 4761350A décrit un tel procédé d'obturation.

Bien que séduisante en théorie, cette solution est complexe à mettre en œuvre. Un objectif de la présente invention est de permettre d'isoler une cellule défectueuse d'un empilement de manière pratique et rapide.

### PRESENTATION DE L'INVENTION

L'invention concerne un dispositif d'isolation configuré pour être monté dans une cheminée de circulation de fluide d'une pile à combustible comprenant un empilement comprenant une pluralité de cellules alignées selon un axe d'empilement et une pluralité de cheminées de circulation de fluide dans l'empilement.

Le dispositif d'isolation est remarquable en ce qu'il comporte une ceinture de forme périphérique configurée pour obturer la communication fluidique entre la cheminée de circulation et au moins une ouverture de circulation d'une cellule à isoler de l'empilement, la ceinture étant déformable entre une première configuration, dite de repos, et une deuxième configuration, dite resserrée, dont la section est plus faible que dans la première configuration.

De manière préférée, un tel dispositif d'isolation peut être positionné de manière pratique à la position désirée dans une cheminée de circulation afin d'isoler une cellule de l'empilement. Une ceinture périphérique permet une obturation localisée tout en permettant une circulation du fluide à travers la ceinture pour alimenter les autres cellules. Son caractère déformable permet un positionnement pratique et rapide sans risque d'endommagement de la surface intérieure de la cheminée de circulation. La ceinture permet d'obturer de manière pratique et simultanée une pluralité d'ouvertures de circulation d'une cellule.

De manière préférée, dans la première configuration, la section de la ceinture est sensiblement analogue à la section de la cheminée de circulation dans laquelle le dispositif d'isolation est configuré pour être monté. Ainsi, la ceinture épouse de manière naturelle, sans contrainte excessive ni déformation la surface intérieure de la cheminée de circulation, ce qui permet d'obturer la cellule de manière pratique et sans risque d'endommagement au voisinage.

Selon un aspect, le dispositif d'isolation comporte un organe de ressort configuré pour contraindre la ceinture dans la première configuration. Ainsi, la ceinture se déploie de manière automatique lorsque l'opérateur ne contraint pas la ceinture. Cela est particulièrement avantageux lorsque la cellule à isoler est éloignée de l'ouverture d'accès de la cheminée de circulation et que l'on souhaite manipuler le dispositif d'isolation de manière aisée.

De manière préférée, l'organe de ressort se présente sous la forme d'une lame de ressort dont la conception est simple. Une lame de ressort peut être positionnée sur la surface intérieure de la ceinture afin d'éviter d'être en contact avec la surface intérieure de la cheminée.

De manière préférée, le dispositif d'isolation comporte un organe d'indexation configuré pour assurer un positionnement précis du dispositif d'isolation dans la cheminée de circulation, en particulier, en regard d'une ouverture d'une ou plusieurs ouvertures de circulation de la cellule à isoler. De manière préférée, une cellule comporte deux joints d'étanchéité de part et d'autre des ouvertures de circulation, l'organe d'indexation est configuré pour coopérer avec les joints d'étanchéité.

Cela est particulièrement avantageux pour assurer un positionnement précis lorsque la cellule à isoler est éloignée de l'ouverture d'accès de la cheminée de circulation. De manière préférée, l'organe d'indexation se présente sous la forme d'une languette périphérique s'étendant en saillie depuis la surface extérieure de la ceinture. Ainsi, l'organe d'indexation permet une coopération par complémentarité de formes avec les joints d'étanchéité.

De préférence, le dispositif d'isolation comporte une pluralité d'organes de guidage configurés pour coopérer avec une surface intérieure de la cheminée de circulation. De préférence, la cheminée de circulation possédant une section définissant une pluralité de coins, les organes de guidage sont configurés pour coopérer avec les coins de la cheminée de circulation. Ainsi, la ceinture est positionnée angulairement de manière précise dans la cheminée, ce qui assure une étanchéité optimale.

L'invention concerne également un ensemble d'une pile à combustible comprenant un empilement comprenant une pluralité de cellules alignées selon un axe d'empilement et une pluralité de cheminées de circulation de fluide dans l'empilement et d'un dispositif d'isolation, tel que présenté précédemment, positionné dans la cheminée de circulation pour obturer la communication fluidique entre la cheminée de circulation et au moins une cellule à isoler de l'empilement.

De manière préférée, l'empilement comporte une alternance de plaques bipolaires et d'assemblages membrane électrode définissant les cellules de l'empilement. Le dispositif d'isolation est positionné dans la cheminée de circulation de manière à obturer la communication fluidique entre la cheminée de circulation et une plaque bipolaire à isoler. Ainsi, l'alimentation en fluide de la plaque bipolaire est stoppée.

De préférence, le dispositif d'isolation possède une épaisseur, définie selon l'axe d'empilement en position montée, qui est supérieure à l'épaisseur d'une plaque bipolaire de manière à interdire toute circulation de fluide dans cette dernière.

Selon un aspect préféré, des joints d'étanchéité étant intercalés entre les plaques bipolaires, les joints d'étanchéité s'étendent en saillie dans la cheminée de circulation de manière à participer à l'obturation étanche de la plaque bipolaire.

De préférence, l'organe d'indexation coopère avec les joints d'étanchéité pour assurer une isolation étanche. Ainsi, le positionnement du dispositif d'isolation est précis pour isoler de manière étanche une plaque bipolaire.

L'invention concerne également un procédé d'isolation d'une cellule d'une pile à combustible comprenant un empilement comprenant une pluralité de cellules alignées selon un axe d'empilement et une pluralité de cheminées de circulation de fluide dans l'empilement, le procédé comprenant les étapes consistant à :
- Déformer le dispositif d'isolation, tel que présenté précédemment, de la première configuration à la deuxième configuration, de manière à réduire sa section afin qu'elle soit inférieure à la section de la cheminée de circulation,
- Déplacer ledit dispositif d'isolation selon la deuxième configuration dans la cheminée de circulation de manière à l'aligner avec au moins une ouverture de circulation de la cellule à isoler et
- Relâcher la contrainte pour déformer le dispositif d'isolation de la deuxième configuration à la première configuration de manière à plaquer la ceinture contre une surface intérieure de la cheminée de circulation afin d'obturer la communication fluidique entre la cheminée de circulation et l'ouverture de circulation de la cellule défectueuse.

De préférence, le procédé d'isolation comprend une étape consistant à connecter électriquement la cellule à isoler à une autre cellule de l'empilement, de préférence, une cellule adjacente. Ainsi, la cellule défectueuse est isolée électriquement pour permettre à l'empilement de fournir une tension électrique.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La [Fig.1] est une représentation schématique d'une pile à combustible selon l'invention.
La [Fig.2] est une première représentation schématique en coupe d'une cheminée de circulation de fluide avec un dispositif d'isolation.
La [Fig.3] est une deuxième représentation schématique en coupe d'une cheminée de circulation de fluide avec un dispositif d'isolation.
La [Fig.4] est une troisième représentation schématique en coupe d'une cheminée de circulation de fluide avec un dispositif d'isolation.
La [Fig.5] est une première représentation schématique d'un dispositif d'isolation.
La [Fig.6] est une deuxième représentation schématique d'un dispositif d'isolation.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

L'invention concerne le domaine des piles à combustible du type à membrane d'échange de protons connu sous son abréviation anglaise PEMFC pour « Proton Exchange Membrane Fuel Cell ». De manière préférée, la pile à combustible est embarquée dans un aéronef afin de fournir de l'énergie à des équipements propulsifs.

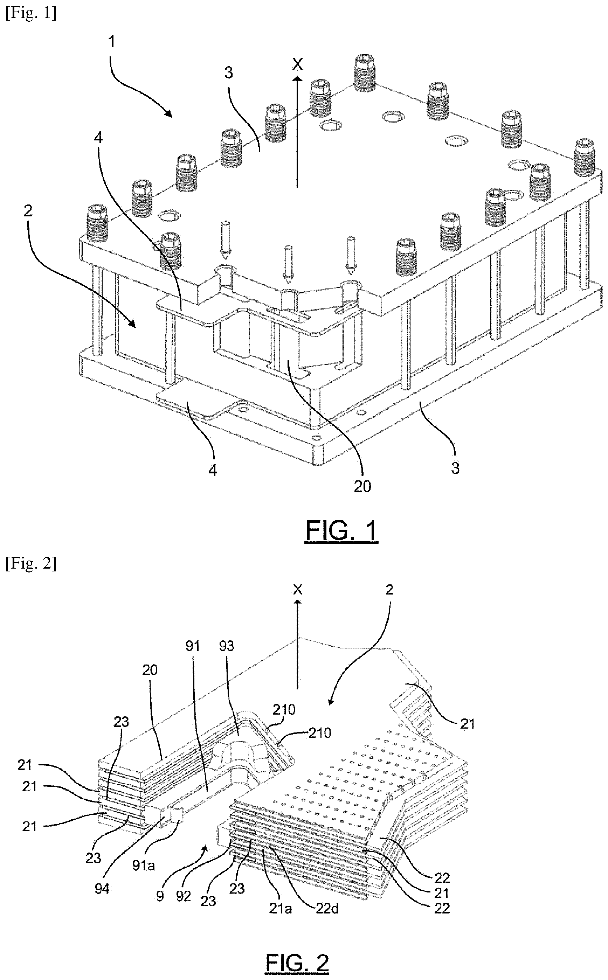

En référence à la [Fig.1], il est représenté une pile à combustible 1 comprenant un empilement 2 comprenant une pluralité de cellules alignées selon un axe d'empilement X. Chaque cellule comprend une pluralité d'ouvertures de circulation de fluide, lesdites ouvertures de circulation de fluide étant alignées parallèlement à l'axe d'empilement X afin de former une pluralité de cheminées de circulation de fluide 20 dans l'empilement 2.

L'empilement 2 des cellules, désigné « Stack » en langue anglaise, permet la réaction électrochimique à partir de fluides, en particulier, de l'hydrogène et de l'oxygène. Dans cet exemple, chaque cellule comprend un Assemblage Membrane Electrode, connu sous son abréviation AME. Chaque AME est mis au contact de gaz réactifs sur ses deux faces opposées (par exemple de l'hydrogène et de l'oxygène éventuellement contenus dans l'air) grâce aux plaques d'interconnexion pour former une cellule. De manière connue, l'assemblage de deux plaques d'interconnexion, appartenant à deux cellules adjacentes, est appelé plaque bipolaire. Ainsi, une plaque bipolaire se retrouve intercalée entre la cathode d'un AME et l'anode de l'AME adjacent. Ainsi, une plaque bipolaire alimente, d'une part un premier AME du côté anodique en combustible (hydrogène) et, d'autre part, un deuxième AME du côté cathodique en comburant (oxygène). De manière générale, chaque plaque bipolaire comporte un circuit interne de refroidissement dans lequel circule un fluide caloporteur servant à apporter de la chaleur ou extraire la chaleur produite par la réaction exothermique. Un tel empilement 2, formé d'une alternance d'AME et de plaques bipolaires, est connu de l'art antérieur et ne sera pas présenté plus en détails.

Dans cet exemple, en référence à la [Fig.1], la pile à combustible 1 comprend en outre des plaques collectrices 4, positionnées aux extrémités de l'empilement 2, de manière à collecter le courant généré par les cellules. De manière connue, la puissance électrique délivrée par la pile à combustible 1 est fonction du nombre de cellules (capacité de tension délivrée) et des débits des fluides réactifs (importance de la réaction électrochimique qui produit le courant).

En référence à la [Fig.1], la pile à combustible 1 comprend en outre deux plaques terminales 3 placées aux extrémités de l'empilement 2 selon l'axe d'empilement X et une pluralité d'organes de traction reliant les plaques terminales 3 entre elles afin de comprimer l'empilement 2.

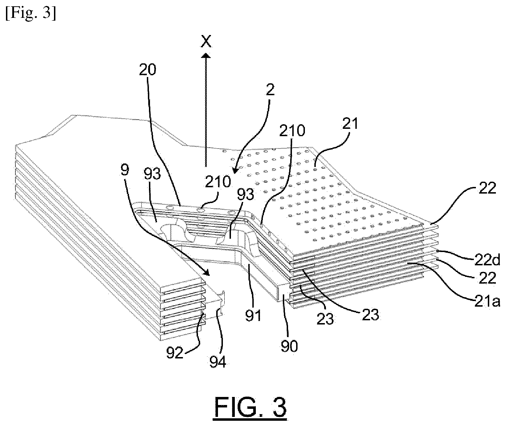

En référence aux figures 2 à 6, il va être présenté un dispositif d'isolation 9 selon l'invention pour isoler une cellule défectueuse d'un empilement 2.

Pour rappel, comme indiqué précédemment, une cellule comporte un assemblage membrane électrode AME et deux plaques d'interconnexion. Deux plaques d'interconnexion adjacentes forment une plaque bipolaire.

En référence aux figures 2 à 4, l'empilement 2 comporte une alternance de plaques bipolaires 21 et d'assemblages membrane électrode AME 22 pour générer de l'énergie électrique. L'empilement 2 comporte plusieurs cheminées de circulation 20 s'étendant selon l'axe d'empilement X et mettant en communication fluidique chacune des plaques bipolaires 21 qui alimentent ensuite les AME 22. Des joints d'étanchéité 23 sont prévus, entre les plaques bipolaires 21 de manière à assurer une étanchéité entre elles. Les joints d'étanchéité 23 sont élastiques et participent à l'indexation du dispositif d'isolation 9 comme cela sera présenté par la suite. De manière préférée, les joints d'étanchéité 23 s'étendent en saillie dans la cheminée de circulation 20, ce qui facilite la formation d'une étanchéité avec le dispositif d'isolation 9. Chaque plaque bipolaire 21 comporte des ouvertures de circulation 210 débouchant dans les cheminées de circulation 20 afin de permettre l'alimentation des plaques bipolaires 21 avec les fluides circulant dans les cheminées de circulation 20.

En pratique, une cheminée de circulation 20 alimente en fluide réactif une seule face d'une plaque bipolaire 21 et de l'AME 22 en contact avec celle-ci, l'autre face étant alimentée par un autre fluide réactif via une autre cheminée de circulation 20.

Dans cet exemple, en référence aux figures 2 à 4, une plaque bipolaire 21 est configurée pour alimenter l'AME 22 située au-dessus d'elle pour cette cheminée de circulation 20. Il va de soi que cela pourrait être différent pour une autre cheminée de circulation 20.

Lorsqu'un AME 22d est défectueux, celui-ci est susceptible de créer un point chaud et présenter des risques pour la pile à combustible 1. Il est donc nécessaire d'isoler la cellule à laquelle appartient l'AME défectueuse 22d, en particulier, la plaque bipolaire 21a qui l'alimente. Dans cet exemple, la plaque bipolaire 21a qui alimente l'AME défectueuse 22d est située sous l'AME défectueuse 22d.

Dans cet exemple, stopper l'alimentation d'un unique fluide réactif d'une AME défectueuse 22d est suffisant pour l'isoler. Il va néanmoins de soi que l'on pourrait également stopper l'alimentation de tous les fluides réactifs de l'AME défectueuse 22d en utilisant un dispositif d'isolation 9 dans une autre cheminée de circulation 20. De manière préférée, l'isolation est réalisée dans la cheminée de circulation 20 conduisant l'hydrogène.

Selon l'invention, en référence aux figures 2 à 4, il est utilisé un dispositif d'isolation 9 selon une forme de réalisation de l'invention afin d'obturer l'ensemble des ouvertures de circulation de fluide 210 d'au moins une plaque bipolaire 21 adjacente à l'AME défectueux 22d. Dans cet exemple, il va être isolé la plaque bipolaire 21 située en-dessous de l'AME défectueux 22d étant donné que c'est cette dernière qui alimente l'AME défectueux 22d. Par la suite, la plaque bipolaire à isoler est référencée 21a.

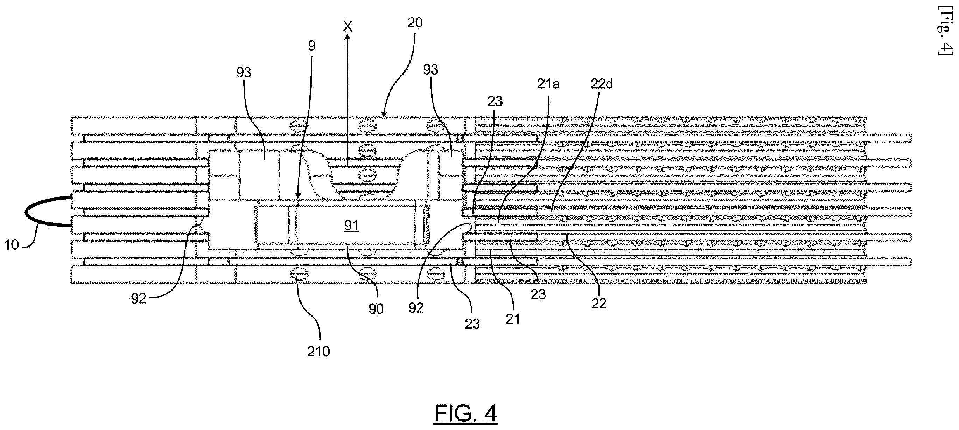

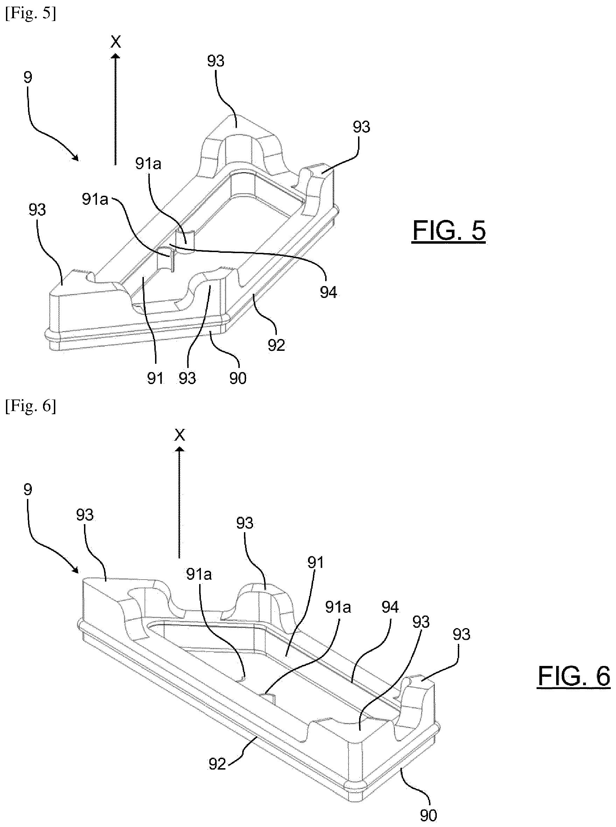

En référence aux figures 5 et 6, le dispositif d'isolation 9 comporte une ceinture 90 de forme périphérique. La ceinture 90 possède une épaisseur, définie selon l'axe d'empilement X en position montée, qui est supérieure à l'épaisseur d'une plaque bipolaire 21 de manière à interdire toute circulation de fluide dans cette dernière. En particulier, la ceinture 90 permet de coopérer avec les joints d'étanchéité 23 qui sont adjacents à la plaque bipolaire à isoler 21a comme illustré à la [Fig.4]. Ainsi, la cheminée de circulation 20 n'est plus en communication fluidique avec les ouvertures de circulation 210 de la plaque bipolaire à isoler 21a. La plaque bipolaire 21 n'est plus alimentée en fluide et ne peut plus alimenter l'AME défectueux 22d. Du fait de sa forme périphérique, la ceinture 90 permet toujours l'alimentation en fluide des plaques bipolaires 21 situées au-dessus et en-dessous du dispositif d'isolation 9, le fluide pouvant circuler au centre de la ceinture 90.

De manière préférée, la ceinture 90 est configurée pour être déformable entre une première configuration, dite de repos, et une deuxième configuration, dite resserrée, dont la section est plus faible que dans la première configuration. De préférence, la section de la première configuration est sensiblement analogue à la section de la cheminée de circulation 20 dans laquelle le dispositif d'isolation 9 est configuré pour être monté de manière à épouser de manière intime son contour. De préférence, la ceinture 90 est formée dans un matériau élastique déformable, par exemple, en élastomère ou en caoutchouc qui possède en outre de bonnes performances d'étanchéité.

De manière préférée, le dispositif d'isolation 9 comporte un organe de ressort 91 configuré pour contraindre la ceinture 90 dans la première configuration. Dans cet exemple, comme illustré aux figures 5 et 6, l'organe de ressort 91 se présente sous la forme d'une lame de ressort. De manière préférée, l'organe de ressort 91 est monté dans une rainure 94 formée dans la ceinture 90, en particulier, dans une face intérieure afin de ne pas entrer en contact avec la surface intérieure d'une cheminée de circulation 20. L'organe de ressort 91 comporte de manière préférée des extrémités en saillie 91a permettant à l'opérateur de contraindre l'organe de ressort 91 de manière pratique afin de déformer la ceinture 90 dans la deuxième configuration.

Un tel organe de ressort 91 n'est pas obligatoire et la ceinture 90 pourrait déformer les joints d'étanchéité 23, de manière élastique, lors de la mise en place du dispositif d'isolation 9.

De préférence, le dispositif d'isolation 9 comporte un organe d'indexation 92 configuré pour se loger entre deux joints d'étanchéité 23 de manière à assurer un positionnement précis du dispositif d'isolation 9 dans la cheminée de circulation 20, c'est-à-dire, aligné avec les ouvertures de circulation 210 de la plaque bipolaire à isoler 21a. Dans cet exemple, l'organe d'indexation 92 se présente sous la forme d'une languette périphérique s'étendant en saillie depuis la surface extérieure de la ceinture 90. De manière préférée, l'organe d'indexation 92 est issu de matière de la ceinture 90, ce qui permet de réduire son coût de fabrication et de garder ses propriétés d'étanchéité. Un tel organe d'indexation 92 permet avantageusement de s'indexer par rapport aux joints d'étanchéité 23 et de les déformer. Une forme de languette permet d'optimiser le contact avec les joints d'étanchéité 23 pour améliorer l'étanchéité.

En référence aux figures 5 et 6, le dispositif d'isolation 9 comporte une pluralité d'organes de guidage 93 configurés pour coopérer avec la surface intérieure de la cheminée de circulations 20 sans pour autant obturer entièrement les ouvertures de circulation 210 des plaques bipolaires adjacentes à la plaque bipolaire à isoler 21a. Dans cet exemple, les organes de guidage 93 sont élémentaires et non continus de manière à autoriser une circulation de fluide entre eux. Les organes de guidage 93 sont de préférence positionnés à chaque coin de le forme définie par la section de la cheminée de circulation 20. Dans cet exemple, la cheminée de circulation 20 possède une section de parallélogramme définissant quatre coins. Aussi, comme illustré aux figures 5 et 6, le dispositif d'isolation 9 comporte quatre organes de guidage 93 afin d'apporter de la rigidité et améliorer la coopération du dispositif d'isolation 9 avec les zones concaves (les coins) de la cheminée de circulation 20. Un guidage et un positionnement précis permettent d'améliorer l'étanchéité de manière importante. Comme illustré aux figures 5 et 6, les organes de guidage 93 se présentent sous la forme de portions s'étendant en saillie verticale depuis une paroi supérieure de la ceinture 90 afin de pouvoir être manipulés de manière pratique par un opérateur. De manière préférée, les organes de guidage 93 sont issus de matière de la ceinture 90, ce qui permet de réduire son coût de fabrication.

Un exemple de mise en œuvre d'un procédé d'isolation d'une cellule d'un empilement 2 va dorénavant être présenté. Dans cet exemple, en référence à la [Fig.4], une cheminée de circulation 20 comporte un assemblage membrane électrode (AME) défectueux 22d qui doit être isolé. La cheminée de circulation 20 s'étend verticalement et est accessible depuis son ouverture supérieure. De manière préférée, l'isolation est réalisée dans la cheminée de circulation 20 conduisant l'hydrogène.

Le procédé comporte une étape de déformation du dispositif d'isolation 9, d'une première configuration à une deuxième configuration, de manière à réduire sa section afin qu'elle soit inférieure à la section de la cheminée de circulation 20. La déformation est réalisée simplement par l'opérateur en agissant sur l'organe de ressort 91, en particulier sur les extrémités 91a de l'organe de ressort 91.

Le procédé comporte une étape de déplacement du dispositif d'isolation 9 selon la deuxième configuration dans la cheminée de circulation 20 de manière à ce que l'organe d'indexation 92 soit aligné avec la plaque bipolaire à isoler 21a située sous l'AME défectueux 22d.

Le procédé comporte une étape de relâchement de la contrainte appliquée au dispositif d'isolation 9 qui, en position de repos, retrouve la première configuration avec une section de repos qui est sensiblement égale à celle de la cheminée de circulation 20. Lors du relâchement de la contrainte, la ceinture 90 se plaque contre les joints d'étanchéité 23 de manière à interdire toute circulation de fluide entre la cheminée de circulation 20 et la plaque bipolaire à isoler 21a située sous l'AME défectueux 22d. La présence de l'organe d'indexation 92 permet un positionnement précis entre les joints d'étanchéité 23 et une coopération étanche optimale. Les organes de guidage 93 permettent de guider l'expansion de la ceinture 90 dans la première configuration en se positionnant dans les zones concaves de la cheminée de circulation 20, en particulier, dans ses 4 coins. Cela limite le risque d'un défaut de positionnement du dispositif d'isolation 9 en particulier lorsque la cheminée de circulation 20 possède une grande hauteur et que l'AME défectueux 22d est éloigné de l'accès à la cheminée de circulation 20.

Une fois le dispositif d'isolation 9 en position, toute circulation fluidique entre la cheminée de circulation 20 et la plaque bipolaire 21a située sous l'AME défectueux 22d est stoppée, ce qui permet d'éviter une alimentation des AME 22 positionnés de manière adjacente à la plaque bipolaire 21a. Ainsi, l'AME défectueux 22d n'est plus alimenté, ce qui évite de former un point chaud.

De préférence, le procédé comporte une étape de connexion électrique des plaques bipolaires adjacentes 21 à l'AME défectueux 22d de manière à assurer une continuité électrique dans la pile à combustible 1. De manière préférée, un câble électrique 10 est utilisé pour relier électriquement les plaques bipolaires 21 comme illustré à la [Fig.4]. Autrement dit, la plaque bipolaire 21a n'est plus alimentée fluidiquement et est shuntée électriquement, ce qui assure une isolation de la cellule défectueuse permettant à la pile à combustible 1 de fonctionner avec une cellule en moins.

Lors de l'utilisation de la pile à combustible 1, du fluide circule dans la cheminée de circulation 20 pour alimenter les cellules qui ne sont pas isolées afin de produire de l'énergie électrique. La pression de fluide permet de contraindre la ceinture 90 radialement vers l'extérieur afin de la plaquer contre les ouvertures de circulation 210, ce qui assure une étanchéité optimale.

Il a été présenté une isolation d'une cellule dont l'AME 22d est défectueux mais il va de soi que l'invention s'applique également à une cellule ou plusieurs cellules dont une plaque bipolaire 21 est défectueuse. Le dispositif d'isolation 9 permet avantageusement de stopper l'alimentation en fluide de ladite plaque bipolaire 21 et de la cellule associée.

Lorsque plusieurs AME 22 adjacents sont défectueux, le dispositif d'isolation 9 possède une hauteur plus importante et un organe d'indexation 92 pour chaque plaque bipolaire à isoler.

## Revendications

1. Dispositif d'isolation (9) configuré pour être monté dans une cheminée de circulation de fluide (20) d'une pile à combustible (1) comprenant un empilement (2) comprenant une pluralité de cellules alignées selon un axe d'empilement X et une pluralité de cheminées de circulation de fluide (20) dans l'empilement (2), le dispositif d'isolation (9) comportant une ceinture (90) de forme périphérique configurée pour obturer la communication fluidique entre la cheminée de circulation (20) et au moins une ouverture de circulation d'une cellule à isoler de l'empilement (2), la ceinture (90) ayant une section définie comme la surface délimitée par la périphérie de la ceinture (90), la ceinture (90) étant déformable entre :
• une première configuration, dite de repos, dans laquelle la section de la ceinture (90) est sensiblement analogue à la section de la cheminée de circulation (20) dans laquelle le dispositif d'isolation (9) est configuré pour être monté et
• une deuxième configuration, dite resserrée, dont la section est plus faible que dans la première configuration.

2. Dispositif d'isolation (9) selon la revendication 1, dans lequel le dispositif d'isolation (9) comporte un organe de ressort (91) configuré pour contraindre la ceinture (90) dans la première configuration.

3. Dispositif d'isolation (9) selon l'une des revendications 1 à 2, dans lequel le dispositif d'isolation (9) comporte un organe d'indexation (92) configuré pour assurer un positionnement précis du dispositif d'isolation (9) dans la cheminée de circulation (20).

4. Dispositif d'isolation (9) selon l'une des revendications 1 à 3, dans lequel le dispositif d'isolation (9) comporte une pluralité d'organes de guidage (93) configurés pour coopérer avec une surface intérieure de la cheminée de circulation (20).

5. Dispositif d'isolation (9) selon la revendication 4, dans lequel, la cheminée de circulation (20) possédant une section définissant une pluralité de coins, les organes de guidage (93) sont configurés pour coopérer avec les coins de la cheminée de circulation (20).

6. Ensemble d'une pile à combustible (1) comprenant un empilement (2) comprenant une pluralité de cellules alignées selon un axe d'empilement X et une pluralité de cheminées de circulation de fluide (20) dans l'empilement (2) et d'un dispositif d'isolation (9), selon l'une des revendications 1 à 5, positionné dans la cheminée de circulation (20) pour obturer la communication fluidique entre la cheminée de circulation (20) et au moins une cellule à isoler de l'empilement (2)

7. Ensemble selon la revendication 6, dans lequel, l'empilement (2) comportant une alternance de plaques bipolaires (21) et d'assemblages membrane électrode (22) définissant les cellules de l'empilement (2), le dispositif d'isolation (9) est positionné dans la cheminée de circulation (20) de manière à obturer la communication fluidique entre la cheminée de circulation (20) et une plaque bipolaire à isoler (21a).

8. Ensemble selon la revendication 7, dans lequel, des joints d'étanchéité (23) étant intercalés entre les plaques bipolaires (21), les joints d'étanchéité (23) s'étendent en saillie dans la cheminée de circulation (20).

9. Ensemble selon la revendication 8, dans lequel, le dispositif d'isolation (9) comportant un organe d'indexation (92) configuré pour assurer un positionnement précis du dispositif d'isolation (9) dans la cheminée de circulation (20), l'organe d'indexation (92) coopère avec les joints d'étanchéité (23) pour assurer une isolation étanche.

10. Procédé d'isolation d'une cellule d'une pile à combustible (1) comprenant un empilement (2) comprenant une pluralité de cellules alignées selon un axe d'empilement X et une pluralité de cheminées de circulation de fluide (20) dans l'empilement (2), le procédé comprenant les étapes consistant à :
• Déformer le dispositif d'isolation (9) selon l'une des revendications 1 à 5, de la première configuration à la deuxième configuration, de manière à réduire sa section afin qu'elle soit inférieure à la section de la cheminée de circulation (20),
• Déplacer ledit dispositif d'isolation (9) selon la deuxième configuration dans la cheminée de circulation (20) de manière à l'aligner avec au moins une ouverture de circulation de la cellule à isoler et
• Relâcher la contrainte pour déformer le dispositif d'isolation (9) de la deuxième configuration à la première configuration de manière à plaquer la ceinture (90) contre une surface intérieure de la cheminée de circulation (20) afin d'obturer la communication fluidique entre la cheminée de circulation (20) et l'ouverture de circulation de la cellule défectueuse.

11. Procédé d'isolation selon la revendication 10 comprenant une étape consistant à connecter électriquement la cellule à isoler à une autre cellule de l'empilement (2), de préférence, une cellule adjacente.

## Patentansprüche

1. Isoliervorrichtung (9), die zur Anbringung in einem Fluidzirkulationskanal (20) einer Brennstoffzelle (1) ausgelegt ist, die einen Stapel (2) umfasst, der eine Vielzahl von gemäß einer Stapelachse X ausgerichteten Zellen und eine Vielzahl von Fluidzirkulationskanälen (20) im Stapel (2) umfasst, wobei die Isoliervorrichtung (9) einen umlaufenden Bund (90) aufweist, der so ausgelegt ist, dass er die Fluidkommunikation zwischen dem Zirkulationskanal (20) und mindestens einer Zirkulationsöffnung einer zu isolierenden Zelle des Stapels (2) verschließt, wobei der Bund (90) einen Querschnitt aufweist, der als die vom Umfang des Bundes (90) begrenzte Fläche definiert ist, wobei der Bund (90) verformbar ist zwischen:
▪ einer ersten, sogenannten Ruhekonfiguration, in der der Querschnitt des Bundes (90) im Wesentlichen dem Querschnitt des Zirkulationskanals (20) entspricht, in dem die Isoliervorrichtung (9) zum Einbau ausgelegt ist, und
▪ einer zweiten, sogenannten verengten Konfiguration, deren Querschnitt kleiner ist als in der ersten Konfiguration.

2. Isoliervorrichtung (9) nach Anspruch 1, wobei die Isoliervorrichtung (9) ein Federelement (91) aufweist, das ausgelegt ist, um den Bund (90) in der ersten Konfiguration zu spannen.

3. Isoliervorrichtung (9) nach einem der Ansprüche 1 bis 2, wobei die Isoliervorrichtung (9) ein Indexierungselement (92) aufweist, das ausgelegt ist, um eine genaue Positionierung der Isoliervorrichtung (9) im Zirkulationskanal (20) zu gewährleisten.

4. Isoliervorrichtung (9) nach einem der Ansprüche 1 bis 3, wobei die Isoliervorrichtung (9) eine Vielzahl von Führungselementen (93) aufweist, die ausgelegt sind, um mit einer Innenfläche des Zirkulationskanals (20) zusammenzuwirken.

5. Isoliervorrichtung (9) nach Anspruch 4, wobei, wenn der Zirkulationskanal (20) einen Querschnitt besitzt, der eine Vielzahl von Ecken definiert, die Führungselemente (93) ausgelegt sind, um mit den Ecken des Zirkulationskanals (20) zusammenzuwirken.

6. Anordnung aus einer Brennstoffzelle (1), die einen Stapel (2) umfasst, der eine Vielzahl von gemäß einer Stapelachse X ausgerichteten Zellen und eine Vielzahl von Fluidzirkulationskanälen (20) im Stapel (2) umfasst, und einer Isoliervorrichtung (9) nach einem der Ansprüche 1 bis 5, die im Zirkulationskanal (20) angeordnet ist, um die Fluidkommunikation zwischen dem Zirkulationskanal (20) und mindestens einer zu isolierenden Zelle des Stapels (2) zu verschließen.

7. Anordnung nach Anspruch 6, wobei, wenn der Stapel (2) abwechselnd bipolare Platten (21) und Membran-Elektroden-Anordnungen (22) aufweist, die die Zellen des Stapels (2) definieren, die Isoliervorrichtung (9) im Zirkulationskanal (20) derart positioniert ist, dass sie die Fluidkommunikation zwischen dem Zirkulationskanal (20) und einer zu isolierenden bipolaren Platte (21a) verschließt.

8. Anordnung nach Anspruch 7, wobei, wenn zwischen den bipolaren Platten (21) Dichtungen (23) angeordnet sind, sich die Dichtungen (23) in den Zirkulationskanal (20) hinein erstrecken.

9. Anordnung nach Anspruch 8, wobei, wenn die Isoliervorrichtung (9) ein Indexierungselement (92) aufweist, das ausgelegt ist, um eine genaue Positionierung der Isoliervorrichtung (9) im Zirkulationskanal (20) zu gewährleisten, das Indexierungselement (92) mit den Dichtungen (23) zusammenwirkt, um eine dichte Isolierung zu gewährleisten.

10. Verfahren zum Isolieren einer Zelle einer Brennstoffzelle (1), die einen Stapel (2) umfasst, der eine Vielzahl von gemäß einer Stapelachse X ausgerichteten Zellen und eine Vielzahl von Fluidzirkulationskanälen (20) im Stapel (2) umfasst, wobei das Verfahren die folgenden Schritte umfasst:
▪ Verformen der Isoliervorrichtung (9) nach einem der Ansprüche 1 bis 5 aus der ersten Konfiguration in die zweite Konfiguration, um ihren Querschnitt so zu verringern, dass er kleiner ist als der Querschnitt des Zirkulationskanals (20),
▪ Verschieben der Isoliervorrichtung (9) gemäß der zweiten Konfiguration im Zirkulationskanal (20), so dass sie mit mindestens einer Zirkulationsöffnung der zu isolierenden Zelle fluchtet, und
▪ Lösen der Spannung, um die Isoliervorrichtung (9) aus der zweiten Konfiguration in die erste Konfiguration zu verformen, so dass der Bund (90) gegen eine Innenfläche des Zirkulationskanals (20) gedrückt wird, um die Fluidkommunikation zwischen dem Zirkulationskanal (20) und der Zirkulationsöffnung der defekten Zelle zu verschließen.

11. Isolierverfahren nach Anspruch 10, umfassend einen Schritt, der darin besteht, die zu isolierende Zelle mit einer anderen Zelle des Stapels (2), vorzugsweise einer benachbarten Zelle, elektrisch zu verbinden.

## Claims

1. Isolation device (9) configured to be mounted in a fluid flow channel (20) of a fuel cell (1) comprising a stack (2) comprising a plurality of cells aligned along a stack axis (X) and a plurality of fluid flow channels (20) in the stack (2), the isolation device (9) comprising a belt (90) which is peripheral and configured to block the fluid communication between the flow channel (20) and at least one flow opening of a cell to be isolated from the stack (2), the belt (90) having a cross-section defined as the surface delimited by the periphery of the belt (90), the belt (90) being deformable between:
• a first configuration, referred to as an idle configuration, wherein the cross-section of the belt (90) is substantially analogous to the cross-section of the flow channel (20) wherein the isolation device (9) is configured to be mounted, and
• a second configuration, referred to as a constricted configuration, wherein the cross-section of the belt (90) is smaller than in the first configuration.

2. Isolation device (9) according to claim 1, wherein the isolation device (9) comprises a spring member (91) configured to constrain the belt (90) in the first configuration.

3. Isolation device (9) according to one of claims 1 to 2, wherein the isolation device (9) comprises an indexing member (92) configured to provide precise positioning of the isolation device (9) in the flow channel (20).

4. Isolation device (9) according to one of claims 1 to 3, wherein the isolation device (9) comprises a plurality of guiding members (93) configured to cooperate with an inner surface of the flow channel (20).

5. Isolation device (9) according to claim 4, wherein the flow channel (20) having a section defining a plurality of corners, the guiding members (93) are configured to cooperate with the corners of the flow channel (20).

6. Fuel cell assembly (1) comprising a stack (2) comprising a plurality of cells aligned along a stack axis (X) and a plurality of fluid flow channels (20) in the stack (2) and an isolation device (9), according to one of claims 1 to 5, positioned in the flow channel (20) to seal the fluid communication between the flow channel (20) and at least one cell to be isolated from the stack (2)

7. Assembly according to claim 6, wherein the stack (2) comprising an alternation of bipolar plates (21) and membrane electrode assemblies (22) defining the cells of the stack (2), the isolation device (9) is positioned in the flow channel (20) so as to block the fluid communication between the flow channel (20) and a bipolar plate to be isolated (21a).

8. Assembly according to claim 7, wherein, seals (23) being inserted between the bipolar plates (21), the seals (23) extend protruding into the flow channel (20).

9. Assembly according to claim 8, wherein, the isolation device (9) comprising an indexing member (92) configured to ensure a precise positioning of the isolation device (9) in the flow channel (20), the indexing member (92) cooperates with the seals (23) to provide a tight isolation.

10. Method of isolating a cell from a fuel cell (1) comprising a stack (2) comprising a plurality of cells aligned along a stack axis (X) and a plurality of fluid flow channels (20) in the stack (2), the method comprising the steps consisting of:
• Deforming the isolation device (9) according to one of claims 1 to 5, from the first configuration to the second configuration, so as to reduce its cross-section so that it is smaller than the cross-section of the flow channel (20),
• Moving said isolation device (9) according to the second configuration in the flow channel (20) so as to align it with at least one flow opening of the cell to be isolated and
• Releasing the constraint to deform the isolation device (9) from the second configuration to the first configuration so as to press the belt (90) against an inner surface of the flow channel (20) in order to block the fluid communication between the flow channel (20) and the flow opening of the defective cell.

11. Method of isolating according to claim 10 comprising a step of electrically connecting the cell to be isolated to another cell of the stack (2), preferably, an adjacent cell.
